# FASCICULE DE BREVET EUROPEEN

(11) **EP 2 970 551 B1**
(45) Date de publication et mention de la délivrance du brevet: **25.01.2017**
(21) Numéro de dépôt: 14709271.2
(22) Date de dépôt: 11.03.2014
(51) Int. Cl.: C08F 293/00, C08L 27/16, C08L 53/00, B01D 71/34, B01D 71/80

(54) **COPOLYMÈRE À BLOCS AMPHIPHILE ET SON UTILISATION POUR LA FABRICATION DE MEMBRANES POLYMÈRES DE FILTRATION**
COPOLYMER MIT AMPHIPHILEN BLÖCKEN UND VERWENDUNG DAVON ZUR HERSTELLUNG VON POLYMERFILTRATIONSMEMBRANEN
COPOLYMER HAVING AMPHIPHILIC BLOCKS, AND USE THEREOF FOR MANUFACTURING POLYMER FILTRATION MEMBRANES

(30) Priorité: 13.03.2013 FR 1352218
(43) Date de publication de la demande: 20.01.2016
(73) Titulaire: Polymem, 31320 Castanet-Tolosan (FR); Arkema France, 92700 Colombes (FR); Centre National de la Recherche Scientifique (C.N.R.S.), 75016 Paris (FR); Université Paul Sabatier Toulouse III, 31400 Toulouse (FR)
(72) Inventeur: LORAIN, Olivier, F-31120 Portet Sur Garonnne (FR); ESPENAN, Jean-Michel, F-31450 Deyme (FR); REMIGY, Jean-Christophe, F-31120 Goyrans (FR); LAHITTE, Jean-Francois, F-31570 Vallesvilles (FR); ROUCH, Jean-Christophe, F-31450 Montbrun Lauragais (FR); SAVART, Thibaut, F-33380 Lacanau-de-Mios (FR); GERARD, Pierre, F-64230 Denguin (FR); MAGNET, Stéphanie, F-64370 Morlanne (FR)
(86) Numéro de dépôt international: PCT/EP2014/054630
(87) Numéro de publication internationale: WO 2014/139977

(56) Documents cités:
- WO-A1-2010/051150
- US-A- 5 190 989

## Description

La présente invention concerne un copolymère à blocs amphiphile particulièrement adapté à la fabrication de membranes polymères de filtration, notamment de microfiltration ou d'ultrafiltration, destinées au traitement d'effluents, ainsi qu'une telle membrane incluant ce copolymère.

Les membranes de microfiltration (MF) et d'ultrafiltration (UF) sont fréquemment utilisées pour réaliser la purification d'effluents, en particulier de l'eau pour la production d'eau potable ou le traitement des eaux usées avant leur rejet dans l'environnement.

Les membranes polymères de MF ou d'UF sont généralement fabriquées par une technique dite d'inversion de phase, consistant à former une solution de polymère et d'additif(s), couramment nommée collodion, à mettre cette solution en forme et enfin à provoquer sa coagulation par mise en contact avec une solution de coagulation contenant un non-solvant du polymère. Suite aux échanges de matière se déroulant entre le collodion et le non-solvant, il se produit une séparation de phase liquide/liquide, conduisant à la formation d'une première phase riche en polymère, qui forme la membrane, et une seconde phase pauvre en polymère, qui forme les pores de la membrane. La séparation de phase liquide/liquide peut également être déclenchée par un changement de température.

Le choix des additifs détermine les propriétés de structure et les performances de la membrane. Ils sont notamment utilisés comme porogènes et/ou hydrophilisant/hydrophobisant et/ou conducteurs électriques et/ou renforts mécaniques et/ou agents structurateurs. Dans le cas de polymères semi-cristallins tels que le polyfluorure de vinylidène (PVDF), fréquemment mis en oeuvre pour la fabrication de membranes de filtration, les additifs peuvent notamment influencer la formation des cristallites qui confèrent des propriétés de résistance mécanique et/ou chimique au matériau constituant la membrane.

Les performances recherchées pour une membrane de filtration sont de trois types : performance de filtration, en particulier du point de vue de la perméabilité et de la sélectivité ; propriétés structurales, conférant notamment à la membrane des propriétés plus ou moins élevées de résistance mécanique et de résistance chimique, en fonction de l"état de surface de la membrane ; et résistance en fonctionnement, c'est-à-dire résistance au vieillissement. Cette résistance est définie comme la capacité d'une membrane à conserver ses propriétés de filtration, de surface et de résistance mécanique intactes pendant la filtration d'effluents à traiter, mais également au contact de solutions chimiques de rinçage, telles que des solutions chlorées, systématiquement mises en oeuvre pour le nettoyage des membranes entre deux cycles de filtration. Le choix des additifs permet de moduler l'un ou plusieurs de ces types de propriétés de la membrane.

Il a été proposé par l'art antérieur d'utiliser, en tant qu'additifs pour la fabrication de membranes, des copolymères, permettant de combiner à eux seuls les avantages de plusieurs additifs, et plus particulièrement, comme décrit par exemple dans le document de brevet WO-A-2010/051150, des copolymères à blocs amphiphiles. Du fait de leur structure particulière, les copolymères à blocs amphiphiles adoptent des conformations spécifiques en solution, et subissent notamment une micellisation en solution. Lors de la mise en oeuvre d'un procédé d'inversion de phase pour la fabrication d'une membrane polymère, du fait de la présence d'eau dans le bain de coagulation, les chaines hydrophiles de ces copolymères sont attirées vers la surface de la membrane, où elles se ségrégent, conférant alors des propriétés de surface anti-colmatantes particulières aux membranes.

L'augmentation de la durée de vie des membranes polymères de filtration constitue actuellement un enjeu important. Les membranes sont commercialisées avec des préconisations concernant leur usage, notamment quant à la concentration instantanée maximale en hypochlorite de sodium (NaOCl) libre, et les zones de pH en filtration et en lavage, recommandées de sorte à augmenter leur durée de vie. Ces limites d'utilisation des membranes sont dues non seulement à la résistance de leur matériau de base, mais également à celle des additifs employés. Ainsi, il est par exemple connu que la polyvinylpyrrolidone (PVP), additif largement utilisé pour la fabrication des membranes polymères de filtration, notamment pour leur apporter de l'hydrophilie de surface (Fontananova et al., 2006), est dégradée par des solutions chlorées, largement utilisées pour le lavage des membranes (Wienk et al., 1995 ; Qin et al., 2002 ; Rouaix et al., 2006). Les membranes comportant de la PVP perdent alors leurs propriétés surfaciques au cours du temps du fait de la dégradation de la PVP, et leur durée de vie en est limitée. Plus particulièrement, le contact des membranes contenant de la PVP avec une solution de NaOCl induit une augmentation de leur perméabilité et une diminution de leur sélectivité, résultant d'une augmentation de la taille des pores, ainsi qu'une diminution de leur résistance mécanique (Arkhangelsky et al., 2007).

Il a également été montré que des additifs de type copolymères pouvaient être détruits par des solutions chimiques acides (Hester et al., 1999). L'état de surface des membranes peut être régénéré, en effectuant une opération de recuit de la membrane, à 90 °C pendant 12 heures. Une telle opération de recuit n'est cependant pas compatible avec une utilisation industrielle des membranes, elle peut être coûteuse, et n'est en outre pas totalement performante. En effet, il a été notamment observé que la résistance à l'absorption de protéines (albumine sérique bovine (BSA)) de membranes après un seul traitement acide de 30 min. est très nettement inférieure à celle de membranes neuves. La régénération de surface par recuit de la membrane ne permet de recouvrer qu'en partie seulement l'effet protecteur du copolymère vis-à-vis de l'absorption de BSA.

Il a été proposé par l'art antérieur différents procédés pour augmenter la résistance des membranes polymères aux solutions chimiques, par des techniques de modification après fabrication telles que le recouvrement, un traitement chimique ou physique, ou par greffage. Aucune de ces solutions ne s'avère cependant satisfaisante. Il subsiste ainsi un besoin pour améliorer de manière significative la durée de vie des membranes polymères de microfiltration et d'ultrafiltration.

Les présents inventeurs ont maintenant découvert, de manière inattendue, que des copolymères à blocs amphiphiles de composition particulière permettaient d'atteindre cet objectif, et permettaient plus particulièrement, mis en oeuvre en tant qu'additifs pour la fabrication de membranes polymères de filtration, de fabriquer de telles membranes ayant des propriétés de surface améliorées, notamment en termes d'hydrophilie, rugosité, etc., des propriétés de transfert de matière, telles que perméabilité, sélectivité, etc., similaires à celles des membranes obtenues à partir des additifs classiques de l'art antérieur, y compris à partir des autres copolymères, tout en présentant une durée de vie significativement allongée. En particulier, la résistance chimique globale de ces membranes est très nettement supérieure à ce qui est observé dans le cadre de l'utilisation d'additifs classiques comme la PVP, et la durabilité des modifications de surface induites par l'additif est largement augmentée. Ces résultats avantageux sont en outre observés quelle que soit la géométrie des membranes, que celles-ci soient planes, spiralées, tubulaires, fibres creuses, etc.

Ainsi, selon un premier aspect, la présente invention concerne un copolymère à blocs amphiphile comportant au moins un premier bloc hydrophile susceptible d'être obtenu à partir de monomères d'acrylate de n-butyle et de méthacrylate d'hydroxyéthyle, et un deuxième bloc hydrophobe susceptible d'être obtenu à partir d'un monomère de méthacrylate de méthyle.

Par monomère, on entend dans la présente description, de manière classique en elle-même, tout monomère polymérisable ou copolymérisable par voie radicalaire. Le terme monomère recouvre bien entendu les mélanges de plusieurs monomères.

Par « amphiphile » utilisé ici, on signifie qu'au moins un bloc du copolymère est hydrophile, et au moins un bloc est hydrophobe.

Par « bloc hydrophile », on entend ici que le bloc du copolymère est soluble dans l'eau, dispersible dans l'eau, ou généralement a la capacité d'absorber et/ou de relarguer de l'eau. Le bloc hydrophile peut être un copolymère statistique contenant au moins lesdits monomères hydrophiles d'acrylate de n-butyle et de méthacrylate d'hydroxyéthyle, et le cas échéant d'autres monomères hydrophiles, ou un copolymère statistique contenant au moins lesdits monomères hydrophiles, et le cas échéant un ou plusieurs autres monomères hydrophiles, avec un ou plusieurs monomères hydrophobes.

Par « bloc hydrophobe », on entend ici que le bloc du copolymère est non soluble ou non dispersible dans l'eau. Le bloc hydrophobe peut être un homopolymère hydrophobe, un copolymère statistique contenant au moins ledit monomère de méthacrylate de méthyle et un ou plusieurs autres monomères hydrophobes, ou un copolymère statistique contenant au moins ledit monomère de méthacrylate de méthyle, et le cas échéant un ou plusieurs monomères hydrophobes, avec un ou plusieurs monomères hydrophiles.

Dans le domaine d'application particulier du copolymère à blocs amphiphile selon l'invention pour la fabrication de membranes polymères, le bloc hydrophobe est avantageusement choisi pour être compatible avec le(s) polymère(s) formant la membrane de filtration. L'homopolymère de méthacrylate de méthyle est notamment compatible avec le PVDF entrant dans la constitution de nombre de membranes.

Comme exposé précédemment, lorsqu'il est mis en oeuvre en tant qu'additif pour la fabrication de membranes polymères, notamment de microfiltration ou d'ultrafiltration, le copolymère à blocs amphiphile répondant à la définition ci-dessus permet tout à fait avantageusement de modifier durablement les propriétés de surface de la membrane, et d'allonger de manière significative sa durée de vie, tout en gardant intactes ses autres propriétés, telles que la performance en filtration et la structure générale, par rapport aux additifs proposés par l'art antérieur. En particulier, ce copolymère à blocs amphiphile permet :
- la production de membranes aussi performantes, en termes de perméabilité et sélectivité, de structure et de propriétés mécaniques, que celles ne contenant pas de copolymère ;
- d'induire des modifications de propriétés de surface des membranes, telles que la disparition de la structure nodulaire ou sphérulitique classique observée pour les polymères semi-cristallins tels que le PVDF, au profit d'une structure filaire, ou encore un enrichissement en fonction hydrophile de la surface des membranes et des pores, qui induit une diminution de l'angle de contact de l'eau sur la membrane en immersion dans l'eau ;
- d'allonger de manière significative la durée de vie des membranes. En particulier, il a été observé par les présents inventeurs que toutes les propriétés de surface des membranes sont conservées après contact avec une dose très élevée de NaOCl libre, c'est-à-dire supérieure à 750 000 ppm.h à pH 8 ; il ne se produit aucune variation de perméabilité ni de propriétés de résistance mécanique en traction après contact avec une dose de 1 350 000 ppm.h à pH 8 de NaOCl libre en contact simple ; il n'est détecté, par spectroscopie infrarouge à transformée de Fourier (FTIR), aucune variation de la quantité de copolymère présent à la surface des membranes après contact simple avec une dose de 750 000 ppm.h à pH 8 de NaOCl libre, ni aucune modification de la perméabilité, de la résistance mécanique et de la quantité de copolymère présent à la surface des membranes, après une filtration en continu d'une solution contenant 1 000 ppm de chlore et à pH 8 pendant 24 h. Ainsi, les doses maximales de chlore utilisables pour le nettoyage des membranes, sans altérer les performances de ces dernières, sont multipliées par 7 au minimum par rapport aux membranes de l'art antérieur.

De manière tout à fait inattendue, il a en outre été découvert par les présents inventeurs que la mise en oeuvre du copolymère à blocs amphiphile selon l'invention en tant qu'additif pour la fabrication d'une membrane polymère par un procédé d'inversion de phase permettait d'accélérer de manière significative la vitesse de coagulation du collodion, contenant la matrice polymère et les additifs, dans le non-solvant, par rapport aux additifs proposés par l'art antérieur. Cette accélération de la vitesse de coagulation ne s'effectue en outre pas au détriment des performances de la membrane. Le copolymère à blocs amphiphile selon l'invention permet ainsi avantageusement d'augmenter la vitesse de production des membranes, notamment les vitesses de filage pour la fabrication de fibres creuses, en particulier pour les polymères coagulant lentement tels que le PVDF. Une telle accélération de la vitesse de coagulation confère également aux membranes une structure plus régulière, les défauts tels que les macrovoids étant limités en nombre et en taille, ce qui améliore les propriétés de résistance de la membrane par rapport aux membranes conventionnelles ne mettant pas en oeuvre le copolymère à blocs amphiphile selon l'invention.

Le copolymère à blocs amphiphile selon l'invention peut contenir des monomères neutralisables et dans certain cas, ces monomères peuvent être pré-neutralisés. Par « neutralisé » utilisé ici, on signifie que le bloc hydrophile du copolymère amphiphile est complètement ou partiellement sous forme de sel. La neutralisation peut intervenir à n'importe quel moment de la polymérisation, ou durant un procédé de post polymérisation, tel que comprenant des étapes de formulation, mélangeage, ou fabrication de film, pièces, articles ou membranes.

L'architecture du copolymère à blocs amphiphile selon l'invention est de préférence de type diblocs, c'est-à-dire comportant un bloc hydrophile et un bloc hydrophobe. La proportion en poids du bloc hydrophile dans le copolymère est alors préférentiellement comprise entre 10 et 70 %, de préférence entre 20 et 60 %, et la proportion en poids du bloc hydrophobe comprise entre 90 et 30 %, de préférence entre 80 et 40 %.

Le copolymère peut autrement être de type triblocs (bloc hydrophobe - bloc hydrophile - bloc hydrophobe, dans lequel les blocs hydrophobes sont identiques ou différents ; ou bloc hydrophile - bloc hydrophobe - bloc hydrophile, dans lequel les blocs hydrophiles sont identiques ou différents), ou consister en une combinaison unique de ces structures de type blocs, telle que mais non limitée aux copolymères à blocs linéaires, en étoiles ou greffés.

Des copolymères à blocs amphiphiles préférés de l'invention sont du type dans lequel au moins :
- le premier bloc hydrophile est composé essentiellement d'un copolymère statistique contenant essentiellement des monomères d'acrylate de n-butyle et de méthacrylate d'hydroxyéthyle ; de préférence, la proportion en poids de monomères d'acrylate de n-butyle dans le premier bloc hydrophile est comprise entre 99 et 50 %, préférentiellement entre 95 et 70 %, et la proportion en poids de monomères de méthacrylate d'hydroxyéthyle y est comprise entre 1 et 50 %, préférentiellement entre 5 et 30 % ; le premier bloc hydrophile présente de préférence une masse moléculaire moyenne en nombre Mn comprise entre 5 et 200 kg/mol, et une masse moléculaire moyenne en poids comprise entre 10 et 400 kg/mol ; son indice de polydispersité est préférentiellement compris entre 1,5 et 5 ;
- et/ou le deuxième bloc hydrophobe est composé d'au moins 50 % de PMMA, le reste étant formé d'un mélange de monomères méthacrylates ou acrylates, de préférence des monomères d'acrylate de n-butyle et de méthacrylate d'hydroxyéthyle ; préférentiellement, le deuxième bloc hydrophobe est composé essentiellement de polyméthacrylate de méthyle.

Un copolymère à blocs amphiphile particulièrement préféré dans le cadre de l'invention est un copolymère diblocs (polyacrylate de n-butyle - co - polyhydroxyéthylméthacrylate - b - bloc hydrophobe), où le bloc hydrophobe est composé d'au moins 50 % de polyméthacrylate de méthyle, le reste étant formé d'un mélange de monomères méthacrylates ou acrylates, de préférence de monomères d'acrylate de n-butyle et de méthacrylate d'hydroxyéthyle. De préférence, la proportion en poids du polyméthacrylate de méthyle est alors sensiblement égale à 67 %, la proportion en poids de polyhydroxyéthylméthacrylate est sensiblement égale à 7 % et la proportion en poids de polyacrylate de n-butyle sensiblement égale à 26 %.

Préférentiellement, il s'agit d'un copolymère diblocs (polyacrylate de n-butyle - co - polyhydroxyéthylméthacrylate - b - polyméthacrylate de méthyle).

D'autres copolymères à blocs amphiphiles selon l'invention sont des copolymères triblocs :
- (bloc hydrophobe - b - polyacrylate de n-butyle - co - polyhydroxyéthylméthacrylate - b - polyméthacrylate de méthyle),
- ou (polyacrylate de n-butyle - co - polyhydroxyéthylméthacrylate - b - polyméthacrylate de méthyle - b -bloc hydrophile). Préférentiellement, ce bloc hydrophile contient essentiellement des monomères (méth)acryliques.

La microséparation de phase des blocs hydrophobes (notamment du bloc PMMA) et hydrophiles permet notamment de conférer à la membrane de filtration dans la constitution laquelle entre le copolymère selon l'invention, des propriétés de perméabilité tout à fait avantageuses. Cette microséparation de phase spécifique permet d'obtenir une structure stable (par la compatibilité du bloc PMMA avec par exemple une matrice de PVDF entrant dans la constitution de la membrane) et une utilisation efficace du bloc hydrophile puisque ce bloc hydrophile va se ségréger de la matrice PVDF et se localiser sur les parois des pores de la membrane de filtration. Cela va générer une surface interne aux pores hydrophile qui va permettre d'augmenter le débit d'eau à filtrer et donc la perméabilité de la membrane.

Le copolymère à blocs amphiphile conforme à l'invention peut présenter une masse moléculaire moyenne en poids comprise entre 10 kg/mol et 400 kg/mol, préférentiellement entre 15 et 100 kg/mol, et une masse moléculaire moyenne en nombre comprise entre 7 et 50 kg/mol. Son indice de polydispersité est de préférence compris entre 1,5 et 5.

Selon une caractéristique particulièrement préférée de l'invention, le premier bloc hydrophile et/ou le deuxième bloc hydrophobe, de préférence les deux blocs, sont susceptibles d'être obtenus par un procédé de polymérisation radicalaire contrôlée (PRC), de préférence par polymérisation SFRP (pour l'anglais « Stable Free Radical Polymerization »), par exemple en présence d'au moins une alcoxyamine, de préférence une monoalcoxyamine de formule (I) :

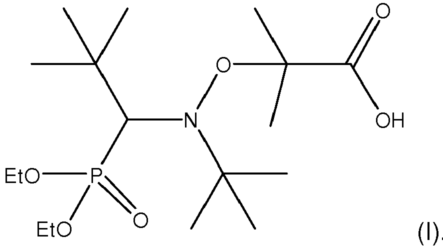

De manière plus générale, la synthèse des blocs du copolymère à blocs amphiphile de l'invention peut être réalisée par tout type de polymérisation radicalaire contrôlée, à une température appropriée au type de PRC choisie (selon qu'il s'agit de la SFRP, ATRP ou RAFT) et aux monomères du copolymère choisis.

Plusieurs types de polymérisation radicalaire contrôlée existent selon la nature de l'agent de contrôle utilisé :
- le type utilisant comme agent de contrôle des nitroxides et, par exemple, comme initiateur des alcoxyamines, connu sous l'abréviation SFRP (correspondant à la terminologie anglaise « Stable free radical polymerization ») ;
- le type utilisant comme agent de contrôle des complexes métalliques et, par exemple, comme initiateur des composés halogénés, connu sous l'abréviation ATRP (correspondant à la terminologie anglaise « Atom Transfer Radical Polymerization ») ;
- le type utilisant des composés soufrés tels que des dithioesters, des trithiocarbamates, des xanthates, des dithiocarbamates, connu sous l'abréviation RAFT (correspondant à la terminologie anglaise « Reversible Addition Fragmentation Transfer »).

Avantageusement, la technique de polymérisation radicalaire utilisée est la polymérisation SFRP réalisée, de préférence, en présence d'au moins une alcoxyamine, ce type de composé assurant, à la fois, le rôle d'agent initiateur et d'agent de contrôle.

Des alcoxyamines utilisées avantageusement pour la préparation d'un copolymère à blocs amphiphile selon l'invention peuvent être choisies parmi les monoalcoxyamines de formule (II) : 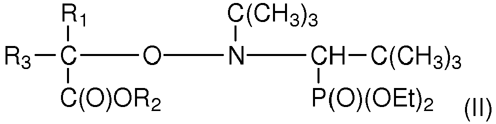 dans laquelle :
R₁ et R₃, identiques ou différents, représentent un groupe alkyle, linéaire ou ramifié, ayant un nombre d'atomes de carbone allant de 1 à 3 ;
R₂ représente un atome d'hydrogène, un métal alcalin, tel que Li, Na, K, un ion ammonium tel que NH₄⁺, NBu₄⁺, NHBu₃⁺ ; un groupe alkyle, linéaire ou ramifié, ayant un nombre d'atomes de carbone allant de 1 à 8, un groupe phényle.

Un exemple particulier de telle monoalcoxyamine, particulièrement préféré dans le cadre de l'invention, est celle répondant à la formule (I) ci-dessus. Elle est commercialisée par la société ARKEMA sous le nom commercial BlocBuilder^{®}MA.

D'autres alcoxyamines pouvant être utilisées pour la préparation de copolymères à blocs amphiphiles selon l'invention sont des polyalcoxyamines issues d'un procédé consistant à faire réagir une ou plusieurs alcoxyamines de formule (II) ci-dessus avec au moins un composé polyinsaturé de formule (III) : 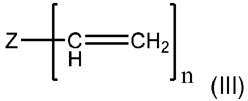 dans laquelle Z représente un groupement aryle ou un groupe de formule Z1-[X-C(O)]ₙ, dans laquelle Z1 représente une structure polyfonctionnelle provenant par exemple d'un composé de type polyol, X est un atome d'oxygène, un atome d'azote porteur d'un groupement carboné ou un atome d'oxygène, un atome de soufre, et n est un nombre entier supérieur ou égal à 2, en présence ou non de solvant(s), de préférence chois(s) parmi les alcools comme l'éthanol, les solvants aromatiques, les solvants chlorés, les éthers et les solvants polaires aprotiques, à une température allant, en général, de 0 à 90 °C, de préférence de 25 à 80 °C, le ratio molaire entre monoalcoxyamine(s) de formule (II) et composé(s) polyinsaturé(s) de formule (III) allant de 1,5 à 1,5 n, de préférence, de n à 1,25 n, cette étape étant éventuellement suivie par une étape d'évaporation du ou des éventuels solvants.

Le composé polyinsaturé de formule (III) peut être choisi parmi les vinylbenzènes polyfonctionnels (Z étant alors un groupe aryle) ou parmi les dérivés acryliques polyfonctionnels (Z étant alors un groupe de formule Z1-[X-C(O)]ₙ). De préférence, le composé polyinsaturé est le divinylbenzène, le trivinylbenzène, l'éthylène glycol diacrylate, le 1,3-butanediol diacrylate, le 1,4-butanediol diacrylate, le 1,6-hexanediol diacrylate, le néopentyl glycol diacrylate, le cyclohexane diméthanol diacrylate, le diéthylène glycol diacrylate, le triéthylène glycol diacrylate, le tétraéthylène glycol diacrylate, le dipropylèneglycol diacrylate, le tripropylèneglycol diacrylate, les polyéthylène glycol diacrylates (commercialisés par Sartomer sous les dénominations SR259, SR344, SR610), les hexanediol diacrylates alcoxylés (commercialisés par Sartomer sous les dénominations CD561, CD565, CD560), le bisphénol-A diacrylate, les bisphénol-A diacrylate éthoxylés (commercialisés par Sartomer sous les dénominations SR349, SR601, SR602, CD9038), le triméthylolpropane triacrylate, le pentaérythritol triacrylate, le tris(2-hydroxyéthyl)isocyanurate triacrylate éthoxylés (commercialisés par Sartomer sous les dénominations SR454, SR499, SR502, SR9035, SR415), le glycéryl triacrylate propoxylé (commercialisé par Sartomer sous la dénomination SR9020), les triméthylolpropane triacrylate propoxylés (commercialisés par Sartomer sous les dénominations SR492 et CD501), le pentaérythritol tétraacrylate, le di-triméthylolpropane tétraacrylate, le pentaérythritol tétraacrylate éthoxylé (commercialisé par Sartomer sous la dénomination SR494), le dipentaérythritol pentacrylate, les caprolactones modifiées dipentaérythritol hexaacrylate (commercialisés par Sartomer sous les dénominations Kayarad DCPA20 et DCPA60), le dipentaérythritol polyacrylate (commercialisé par UCB Chemicals sous la dénomination DPHPA).

Les polyalcoxyamines ainsi produites répondent à la formule (IV) suivante : 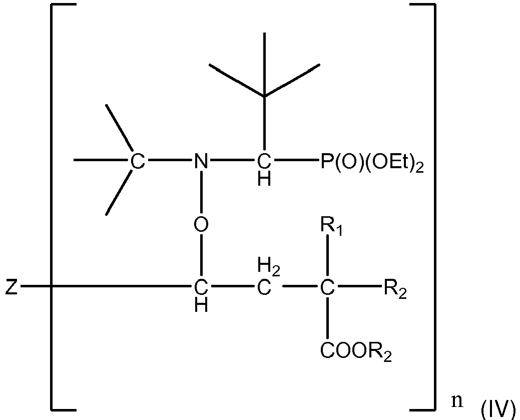 dans laquelle n, R₁, R₂ et R₃, Z ont les mêmes significations que celles données ci-dessus.

Un exemple particulier de polyalcoxyamine conforme à la définition générale donnée ci-dessus est la polyalcoxyamine répondant à la formule suivante :

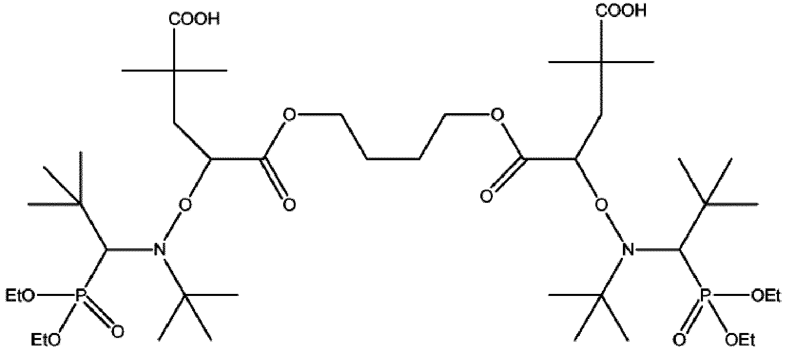

L'alcoxyamine ou polyalcoxyamine peut être introduite dans le milieu de polymérisation à raison de 0,01% à 10%, de préférence 0,1 à 5% en masse par rapport à la masse de monomère(s) entrant dans la constitution du copolymère à blocs amphiphile selon l'invention.

L'étape de polymérisation pour réaliser les blocs est réalisée à une température appropriée au type de monomères entrant dans la constitution du bloc. Les températures de polymérisation dépendent des monomères constitutifs du bloc. Ainsi, pour initier la polymérisation des monomères acrylates et des monomères méthacrylates à partir d'alcoxyamines telles que définies ci-dessus, on choisira avantageusement une température supérieure à 50 °C, de préférence inférieure à 130 °C, de préférence comprise entre 90 °C et 125 °C.

Le taux de conversion des monomères ou mélange de monomères constitutifs des blocs dépend généralement du temps de fabrication consacré au bloc et est fixé généralement de manière à obtenir un bloc de masse molaire moyenne en nombre prédéterminée.

Entre deux étapes de préparation de deux blocs adjacents et après l'étape de préparation du dernier bloc (c'est-à-dire le bloc d'extrémité), il peut notamment être prévu une étape de polymérisation du(des) monomère(s) résiduel(s) constitutifs du bloc qui vient d'être synthétisé. Cette polymérisation est réalisée généralement par polymérisation radicalaire classique, par adjonction au milieu dans lequel vient d'être réalisé le bloc, d'un initiateur de polymérisation radicalaire classique choisi, généralement, parmi les composés peroxydes (tels qu'un composé peroxyde de la gamme Luperox^{®}, les composés persulfates (tels que le persulfate de sodium, le persulfate de potassium, le persulfate d'ammonium), les composés azoïques (tels que le bis-azidoisobutyronitrile, intitulé AiBN, le 2,2'-azobis(2-amidinopropane) dihydrochlorure et les sels métalliques et ammoniacaux de l'acide 4,4'-azobis(4-cyanopentanoïque)), les composés redox (tels que le couple persulfate (de sodium, potassium ou ammonium/vitamine C, le couple persulfate/métabisulfite de sodium ou de potassium, le couple eau oxygénée/sels de l'ion ferreux, le couple hydroperoxyde de tertiobutyle /sulfoxylate de sodium ainsi que toute autre combinaison possible oxydant(s)/réducteur(s)). La température de polymérisation de cette étape est choisie, de préférence, de sorte à être inférieure d'au moins 20 °C à celle de polymérisation du bloc qui vient d'être polymérisé. Le fait de diminuer la température permet de conserver le bloc précédemment synthétisé sous forme de polymère vivant, sans toutefois continuer la polymérisation de celui-ci.

Le copolymère à blocs amphiphile selon l'invention trouve application dans de nombreux domaines.

En particulier, la présente invention concerne l'utilisation de ce copolymère à blocs amphiphile, répondant à l'une ou plusieurs des caractéristiques ci-avant, en tant qu'additif pour la fabrication d'une membrane polymère de filtration, notamment de microfiltration ou d'ultrafiltration, en particulier par la technique d'inversion de phase, qui sera décrite de manière détaillée plus avant dans la présente description.

Selon un autre aspect, la présente invention concerne une membrane polymère, notamment de microfiltration ou d'ultrafiltration, qui comprend une matrice polymère hydrophobe et un copolymère à blocs amphiphile répondant à l'une ou plusieurs des caractéristiques exposées ci-avant.

Dans des modes de réalisation particuliers de l'invention, la matrice polymère hydrophobe comprend un polymère fluoré, de préférence un homopolymère de polyfluorure de vinylidène (PVDF). Cet homopolymère présente de préférence une masse molaire comprise entre 10⁵ et 10⁷ g/mol.

Dans des modes de réalisation particuliers de l'invention, la membrane comprend 60 à 90 % en poids de la matrice polymère hydrophobe et 40 à 10 % en poids du copolymère à blocs amphiphile.

La taille des pores de la membrane de microfiltration ou d'ultrafiltration ainsi fabriquée peut varier entre 1 nm et 1 µm.

Cette membrane peut présenter toute géométrie, par exemple plane, spiralée, tubulaire, ou fibres creuses.

La membrane polymère selon l'invention peut être obtenue par un procédé d'inversion de phase, mis en oeuvre de manière classique en elle-même, à partir d'une solution, dite collodion, contenant la matrice polymère hydrophobe, un copolymère à blocs amphiphile conforme à l'invention, et le cas échéant un ou plusieurs autres additifs, en solution dans un solvant.

Dans des modes de mise en oeuvre particuliers d'un tel procédé d'inversion de phase, ladite solution contient les proportions en poids suivantes :
- 10 à 40 % de la matrice polymère hydrophobe, en particulier de PVDF;
- 0,1 à 30 %, de préférence 3 à 15 %, en poids d'un copolymère à blocs amphiphile conforme à l'invention ;
- 40 à 90 % de solvant ;
- le cas échéant, 0 à 20 % en masse d'additif(s) autre(s).

Le solvant peut notamment être choisi parmi : le diméthylacétamide (DMAc), la N-méthyl-pyrrolidone (NMP), le diméthyl formamide (DMF), la diméthylsulfone (DMSO₂), le diméthylsulfoxide (DMSO), le trialkylphosphate, le tétrahydrofurane (THF), l'acétone, le benzaldéhyde, l'acétophénone, la benzophénone, l'hexaméthylphosphoramide (HMPA), la tétraméthylurée (TMU), le triéthylphosphate (TEP), le triméthylphosphate (TMP), ou tout autre solvant permettant de solubiliser la matrice polymère hydrophobe et le copolymère à blocs amphiphile conforme à l'invention ; ou toute combinaison de tels solvants.

Parmi les additifs, autres que le copolymère à blocs amphiphile conforme à l'invention, pouvant être choisis dans le cadre de l'invention, en fonction des caractéristiques attendues de la membrane, on peut citer :
- des additifs classiques comme le poly(méthacrylate de méthyle) (PMMA), le poly(éthylène glycol) (PEG), la polyvinylpyrrolidone (PVP), des sels inorganiques comme le chlorure de lithium (LiCI), le chlorure de magnésium (MgCl₂), le chlorure de zinc (ZnCl₂) ;
- des non-solvants de la matrice polymère hydrophobe, tels que l'eau, l'éthanol, le méthanol, ou des combinaisons de ces non-solvants ;
- des oligomères, des polymères, des tensioactifs et/ou des copolymères autres, mais de la même famille, que le copolymère à blocs amphiphile conforme à l'invention ;
- des additifs de type (nano)particules métalliques et/ou céramiques, ainsi que des nanotubes de carbones.

Pour la mise en oeuvre de la dernière étape du procédé d'inversion de phase, dans laquelle le collodion mis en forme est mis en contact avec une solution de coagulation et un non-solvant de la matrice polymère hydrophobe, ce non-solvant, qui peut se trouver sous forme liquide, sous forme vapeur ou sous une forme successivement vapeur puis liquide, peut être de tout type classique en lui-même, notamment de l'eau, du méthanol, de l'éthanol, etc. La solution de coagulation peut en outre contenir un ou plusieurs solvants de la matrice polymère hydrophobe, préférentiellement identiques à ceux contenus dans le collodion, par exemple de la NMP à une concentration en poids comprise entre 0 et 50 %, en particulier entre 0 et 10 %, et un ou plusieurs additifs, tels que du LiCl ou du PEG.

L'inversion de phase proprement dite peut autrement être réalisée par traitement thermique, de manière à coaguler la solution initiale, par diminution de la température ou, pour certains systèmes, par augmentation de la température.

Les paramètres opératoires des procédés d'inversion de phase sont classiques en eux-mêmes, et décrits par exemple dans les publications de Penga et al., 2012 ; McKelvey et al., 1997 ; Mulder, 1996 ; Porter, 1990.

A titre d'exemple, la température du collodion peut notamment être comprise entre 10 et 130 °C, plus particulièrement entre 50 et 80 °C ; la température du bain de coagulation peut notamment être comprise entre 10 et 70 °C, plus particulièrement entre 30 et 50 °C.

L'étape de mise en forme du collodion peut être effectuée par tout moyen classique en lui-même, par exemple, pour la fabrication de fibres creuses, par une filière d'extrusion, à un débit pouvant être compris entre 0,1 et 72 ml/min, plus particulièrement entre 7 et 11 ml/min.

Dans les modes de réalisation particuliers de la membrane polymère dans lesquels cette dernière est mise en forme de sorte à constituer le corps de fibres creuses, le procédé d'inversion de phase prévoit en outre, de manière classique en elle-même, la mise en oeuvre d'une solution dite liquide interne, permettant de former le volume interne des fibres creuses. Ce liquide interne contient de préférence un non-solvant de la matrice polymère hydrophobe, tel que l'eau, du méthanol, de l'éthanol, etc., et, le cas échéant, un ou plusieurs solvants de la matrice polymère hydrophobe, préférentiellement identiques à ceux contenus dans le collodion, par exemple de la NMP à une concentration en poids comprise entre 0 et 100 %, en particulier entre 15 et 30 %, et un ou plusieurs additifs, tels que du LiCl ou du PEG. Sa température peut être comprise entre 20 et 90 °C, en particulier entre 30 et 50 °C. Son débit d'extrusion peut être compris entre 0,1 et 18 ml/min, plus particulièrement entre 1 et 5 ml/min

Selon un autre aspect, la présente invention concerne l'utilisation d'une membrane polymère répondant à l'une ou plusieurs des caractéristiques ci-avant pour le traitement d'effluents, en particulier de l'eau.

Les caractéristiques et avantages de l'invention apparaîtront plus clairement à la lumière des exemples de mise en oeuvre ci-après, fournis à simple titre illustratif et nullement limitatifs de l'invention, avec l'appui des figures 1 à 4, dans lesquelles :
- la figure 1 représente un cliché de microscopie électronique à balayage (MEB) d'une membrane polymère plane conforme à l'invention ;
- la figure 2 montre des images obtenues par imagerie SIMS des macropores de la membrane de la figure 1, à partir d'un faisceau d'ions primaires, image de gauche, fluor (« 19F »), image de droite, oxygène (« 160 ») ;
- la figure 3 montre les spectres infrarouge à transformée de Fourier (FTIR) de la membrane de la figure 1 avant et après mise en contact avec une dose de 750 000 ppm.h de NaOCl à pH 8 ;
- et la figure 4 représente de manière schématique un dispositif mis en oeuvre pour évaluer la vitesse de coagulation d'un collodion contenant un copolymère à blocs amphiphile conforme à l'invention.

### EXEMPLE 1 - Synthèse d'un copolymère à blocs amphiphile conforme à l'invention

A titre d'exemple de l'invention, il est préparé un matériau polymère comprenant un copolymère diblocs polyacrylate de n-butyle - co - polyhydroxyéthylméthacrylate - b - polyméthacrylate de méthyle-co-polyacrylate de butyle-co-polyhydroxyéthylméthacrylate.

Le procédé de préparation de ce matériau polymère peut s'appliquer à des modes de polymérisation en masse, en solvant, en émulsion, en suspension. Chaque étape du procédé peut être effectuée dans le même réacteur via un procédé batch, ou dans des réacteurs différents éventuellement selon des procédés semi-continus ou continus.

Les matériaux polymères préparés selon l'exemple exposé ci-dessous sont respectivement analysés par :
- RMN ¹H dans du chloroforme deutéré sur appareil Brucker 400 ;
- chromatographie d'exclusion stérique réalisée à 30 °C en utilisant un étalon polystyrène comme référence pour mesurer les masses moléculaires moyennes en nombre.

### 1.1/ Initiateur de type alcoxyamine

On utilise l'initiateur et agent de contrôle du type monoalcoxyamine de formule (I) suivante :

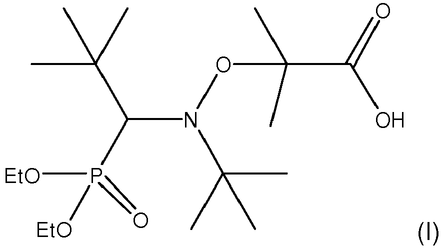

Cet initiateur est commercialisé par ARKEMA sous le nom commercial BlocBuilder^{®}MA.

### 1.2/ Etape 1 - Préparation d'un premier bloc hydrophile

Il est préparé un premier bloc hydrophile de polyacrylate de n-butyle copolymérisé avec du polyhydroxyéthylméthacrylate vivant, qui sera utilisé pour la préparation du copolymère à blocs amphiphile conforme à l'invention.

Le protocole de préparation de ce premier bloc vivant est le suivant.

Dans un réacteur de 16 litres en inox à double enveloppe, équipé d'une soupape de décompression tarée à 10 bars et d'un agitateur du type « double hélice », on introduit 12 kg d'acrylate de n-butyle ainsi que 3 kg de méthacrylate d'hydroxyéthyle et 544 g de l'amorceur BlocBuilder®MA défini ci-dessus, à température ambiante. Le mélange est dégazé et maintenu sous 3 bars d'atmosphère d'azote puis chauffé jusqu'à atteindre la température de 110 °C. L'exothermie de la réaction de polymérisation est contrée grâce à un échangeur thermique à eau glycolée à -25 °C. Le mélange est chauffé pendant 450 minutes, jusqu'à achèvement de la réaction de polymérisation. Le taux de solide, mesuré par thermobalance, est de 78 %.

Le mélange est ensuite refroidi à température ambiante en 15 minutes, de manière à tremper le mélange réactionnel. On récupère une solution de polymère dans de l'acrylate de n-butyle et du méthacrylate d'hydroxyéthyle par une vanne de fond.

Une mesure d'extrait sec indique qu'il y eu une conversion de 77 %, c'est-à-dire que 77 % de l'acrylate de n-butyle et du méthacrylate d'hydroxyéthyle présents dans le mélange initial se sont polymérisés.

Le polymère d'acrylate de n-butyle et d'hydroxyéthylméthacrylate intermédiaire est caractérisé par chromatographie d'exclusion stérique et par RMN, qui fournissent les données suivantes :
- Masse moléculaire moyenne en nombre Mn = 6620 g/mol ;
- Masse moléculaire moyenne en poids Mw = 17730 g/mol ;
- Indice de polydispersité Ip = 2,7.
- Composition, en poids : 56,2 % de polyacrylate de butyle, 23,1 % d'acrylate de n-butyle, 20,4 % de polyhydroxyéthylméthacrylate et 0,3 % de méthacrylate d'hydroxyéthyle.

Cette solution de polymères est utilisée telle quelle pour l'étape 2 ci-après.

### 1.3/ Etape 2 - Préparation du copolymère diblocs

Le polymère diblocs amphiphile est préparé par polymérisation radicalaire contrôlée, selon une méthode classique en elle-même.

Le protocole de préparation est le suivant.

Après nettoyage au toluène, le même réacteur que dans l'étape 1 est chargé avec 3,2 kg de la solution obtenue dans l'étape 1 et 6,8 kg de méthacrylate de méthyle, le mélange initial comportant ainsi 2,5 kg de polyacrylate de butyle et polyhydroxyéthylméthacrylate vivant, 0,7 kg d'acrylate de n-butyle résiduel, 10 g de méthacrylate d'hydroxyéthyle résiduel et 6,8 kg de méthacrylate de méthyle. Le tout est dilué avec 4,9 kg de toluène.

Après mise sous azote, le réacteur est chauffé jusqu'à 105 °C pendant 90 minutes puis à 120 °C pendant 90 minutes avant d'être refroidi en 15 minutes à 50 °C.

La conversion intermédiaire est alors de 66 %. On ajoute alors dans le milieu réactionnel 52,8 g de Luperox® 270 ajouté à 146 g de toluène de dilution.

Le mélange est dégazé, mis sous azote, agité puis chauffé jusqu'à 120 °C pendant 150 minutes. Le mélange final présente un extrait sec de 95 %. Il est ensuite transféré à travers une ligne de transfert chauffée à 70 °C dans une extrudeuse dégazeuse Clextral BC21 possédant 5 puits de dégazage et 12 zones de chauffe, allant de 70 °C à l'entrée de l'extrudeuse jusqu'à 180 °C au niveau de la filière de type « jonc ». Le copolymère à blocs fondu est ensuite refroidi dans un bac à eau puis granulé.

Ce copolymère présente les caractéristiques suivantes :
- Masse moléculaire moyenne en nombre Mn= 16030 g/mol ;
- Masse moléculaire moyenne en poids Mw= 53070 g/mol ;
- Indice de polydispersité Ip = 3,3.

La composition chimique du copolymère est déterminée par RMN ¹H et donne les résultats suivants :
- polyméthacrylate de méthyle : 66,6 % (en poids) ;
- polyacrylate de n-butyle: 25,4 % (en poids) ;
- polyhydroxyéthylméthacrylate : 6,9 % (en poids) ;
- méthacrylate de méthyle < 0,3 % (en poids) ;
- acrylate de n-butyle < 0,8 % (en poids) ;
- méthacrylate d'hydroxyéthyle < limite de détection
- toluène < 0,5% (en poids).

### EXEMPLE 2 - Membranes polymères planes à base de PVDF et d'un copolymère à blocs amphiphile conforme à l'invention

### 2.1/ Fabrication

Une membrane polymère plane P1 conforme à la présente invention est fabriquée à partir d'un collodion contenant :
- 15 % en poids de PVDF, grade commercial, de masse molaire comprise entre 900 000 et 1 100 000 g/mol (HSV 900, Arkema Inc., USA)
- 10 % en poids du copolymère à blocs amphiphile de l'Exemple 1
- 75 % en poids de NMP.

Un film coulé à partir de ce collodion est immergé successivement dans deux bains d'eau, nommés bain 1 et bain 2.

Les conditions expérimentales sont les suivantes :
- température du collodion : 25,3 °C
- température des bains : 22,5 °C
- température de l'air ambiant : 25,3 °C
- humidité relative de l'air ambiant : 74,6 %
- temps d'immersion dans le bain 1 : 22 min
- volume du bain 1 : 5 l
- temps d'immersion dans le bain 2 : 24 h
- volume du bain 2 : 5 l

On obtient une membrane polymère poreuse plane d'épaisseur 220 µm.

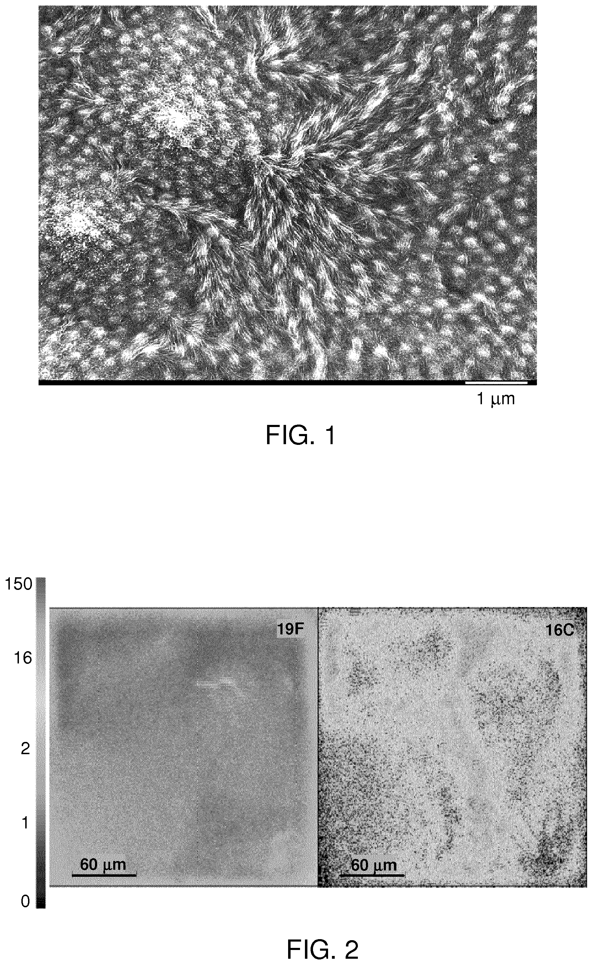

Un cliché obtenu par microscopie électronique à balayage (MEB) de la surface filtrante de cette membrane est montré sur la figure 1. On y observe que la membrane présente un aspect et un état de surface différents de ceux observés pour les membranes en PVDF conventionnelles. Plus particulièrement, on observe que la membrane présente une structure de surface filaire, qui s'initie au niveau des nodules cristallins du PVDF. Une hydrophilisation de surface est observée.

Les modifications induites par le copolymère conforme à l'invention sont également observables au niveau des macropores de la membrane, comme montré sur les images de la figure 2, obtenues par imagerie par émission d'ions secondaires (SIMS), qui témoignent d'un enrichissement en copolymère sur les parois des pores. Il en résulte une hydrophilisation de ces parois, qui a pour effet d'améliorer les propriétés de flux et de surface de la membrane.

D'autres membranes polymères planes conformes à l'invention, nommées P2 et P3, sont fabriquées de manière similaire, à partir de collodions contenant respectivement 3 %, et 7 %, en poids du copolymère à blocs amphiphile de l'Exemple 1, et 15 % en poids de PVDF, dans la NMP.

### 2.2/ Résistance au vieillissement

Afin de déterminer la capacité de résistance au vieillissement de la membrane P1, cette dernière a été mise en contact avec une dose de 750 000 ppm.h de NaOCl à pH 8. Cette dose représente trois fois la dose totale que subit classiquement une membrane de filtration durant toute sa durée d'utilisation. La concentration instantanée, de 1 000 ppm de chlore libre, est supérieure à la dose maximale généralement recommandée par les fabricants pour les membranes de filtration commerciales.

Une membrane P1 a également été soumise à une dose de 168 00 ppm.h de NaOCl à pH 8.

De manière surprenante, aucun impact des traitements par NaOCl n'est observé sur la qualité de la surface de la membrane ni sur la quantité de copolymère présente en surface de la membrane. En particulier, l'hydrophilie de surface et les signaux FTIR ne sont pas modifiés, indiquant une présence constante du copolymère en surface de la membrane.

La perméabilité de la membrane avant et après une dose de 750 000 ppm.h de NaOCl, et la perméabilité relative après trempage dans une solution d'eau réelle (eau de surface prélevée dans le canal du Midi, à Toulouse), avant et après une dose de 168 000 ppm.h de NaOCl, de la membrane P1 sont mesurées. La perméabilité, à l'eau pure, est mesurée à l'aide d'une cellule Amicon® 8050. La pression est fixée à 0,3 et 0,7 bars, tandis que le débit de perméat est mesuré pour ces deux pressions. La perméabilité est calculée en divisant le débit par la surface filtrante et la pression transmembranaire. La valeur moyenne de la perméabilité est donnée.

Les résultats obtenus sont indiqués dans le tableau 1 ci-après.

**Tableau 1 - Propriétés de perméabilité de la membrane P1 avant et après contact avec NaOCl.**

| | Avant NaOCl | Après NaOCl |
|---|---|---|
| Perméabilité (I.h⁻¹.m⁻².bar⁻¹) à 20 °C | Lp₀ = 90 ± 5 | Lp = 87 ± 4 |
| Rapport de la perméabilité à l'eau après trempage dans une eau réelle sur la perméabilité à l'eau avant trempage (Lp/Lp₀) | 0,76 ± 0,04 | 0,79 ± 0,05 |

La perméabilité de la membrane est inaltérée par la dose de NaOCl pourtant très élevée mise en oeuvre.

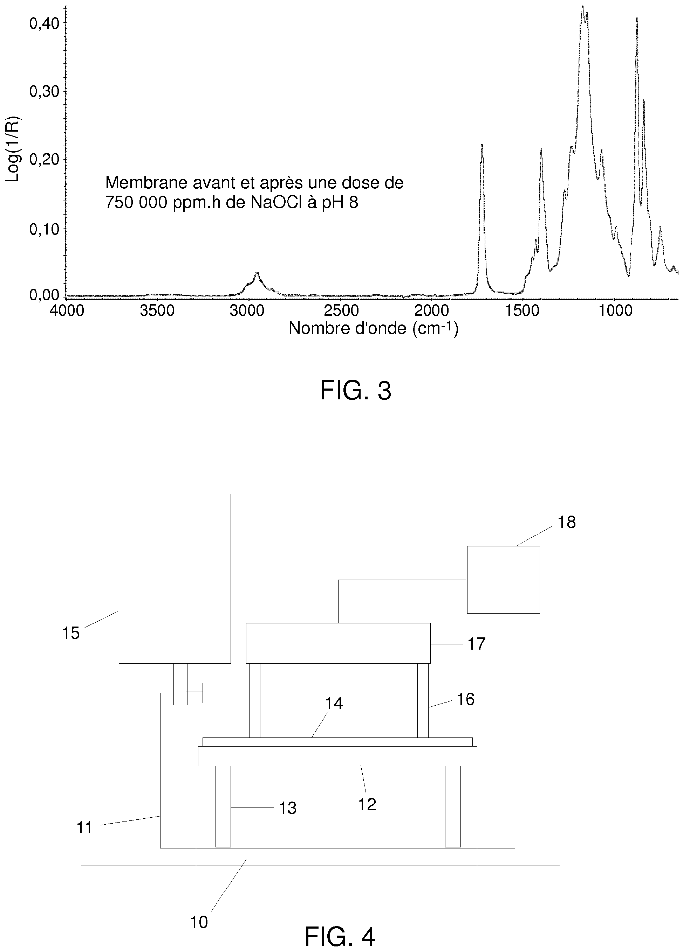

Les spectres obtenus par spectroscopie infrarouge à transformée de Fourier (FTIR), pour la membrane P1 respectivement avant et après contact avec une dose de 750 000 ppm.h de NaOCl, sont montrés sur la figure 3. On n'y observe aucun changement de signal consécutif au traitement par NaOCl. En particulier, le pic relatif au copolymère, situé à 1725 cm⁻¹, ne change pas d'intensité.

Les résultats ci-avant démontrent la capacité particulièrement élevée de résistance chimique de la membrane conforme à l'invention vis-à-vis des solutions chlorées, contrairement à ce qui est observé pour les membranes mettant en oeuvre des additifs classiques, tels que la PVP.

Les membranes P2 et P3 conformes à l'invention ont également été soumises à des doses de NaOCl à pH 8.

La perméabilité de chaque membrane avant et après une dose de 750 000 ppm.h de NaOCl à pH 8, et la perméabilité relative après trempage dans une solution d'eau réelle avant et après une dose de 168 000 ppm.h à pH 8 de NaOCl, de chacune des membrane M2 et M3 sont mesurées. Des spectres FTIR sont également réalisés respectivement avant et après contact avec une dose de 750 000 ppm.h à pH 8 de NaOCl. Les résultats de ces tests sont montrés dans le tableau 2 ci-après.

**Tableau 2 - Propriétés de perméabilité et signal FTIR à 1725 cm⁻¹ pour les membranes P2 et P3 avant et après contact avec NaOCl**

| | Membrane P2 (3 % copolymère) | | Membrane P3 (7 % copolymère) | |
|---|---|---|---|---|
| | Avant NaOCl | Après NaOCl | Avant NaOCl | Après NaOCl |
| Perméabilité (I.h⁻¹.m⁻².bar⁻¹) à 20 °C | Lp₀=422 ± 21 | Lp=412 ± 21 | Lp₀=112 ± 6 | Lp=108 ± 5 |
| Rapport de la perméabilité à l'eau après trempage dans une eau réelle sur la perméabilité à l'eau avant trempage (Lp/Lp₀)) | 0,73 ± 0,04 | 0,71 ± 0,03 | 0,76 ± 0,05 | 0,71 ± 0,06 |
| Intensité relative du signal FTIR à 1725 cm⁻¹ | 0,21 ± 0,01 | 0,20 ± 0,01 | 0,4 ± 0,02 | 0,38 ± 0,02 |

Aucune variation significative de ces paramètres due au traitement par NaOCl n'est là encore observée.

### EXEMPLE 3 - Membrane polymère de type fibre creuse à base de PVDF et d'un copolymère à blocs amphiphile conforme à l'invention

### 2.1/ Fabrication

Une membrane polymère de type fibre creuse F1 conforme à la présente invention est fabriquée à partir d'un collodion contenant :
- 15 % en poids de PVDF, grade commercial, de masse molaire comprise entre 900 000 et 1 100 000 g/mol (HSV 900, Arkema Inc., USA)
- 3 % en poids du copolymère à blocs amphiphile de l'Exemple 1
- 3% en poids de chlorure de lithium (LiCl)
- 79 % en poids de NMP.

Les conditions expérimentales de fabrication sont les suivantes : dissolution, sous agitation mécanique à l'aide d'une tripale en téflon, du copolymère pendant 24 h dans la NMP, en chauffage au bain marie à 50 °C, avec condensation des vapeurs de solvant ; puis ajout du PVDF et dissolution à 57 °C pendant encore 24 h ; mise sous vide (au moyen d'une pompe à vide) du collodion pour dégazage, pendant 24 h ; fabrication d'une fibre creuse par extrusion du collodion au travers d'une filière annulaire.

Les conditions de filage sont les suivantes :
- débit de collodion : 7,2 cm³.min⁻¹
- débit de liquide interne : 2,7 cm³.min⁻¹
- T°du collodion = T°du liquide interne = 50 °C
- T°du bain de coagulation = 32 °C
- liquide interne : eau/NMP 85%/15% en masse
- air gap : 10 cm
- vitesse de filage : 11 m.min⁻¹

### 2.2/ Résistance au vieillissement

Afin de déterminer la capacité de résistance au vieillissement de la membrane F1, cette dernière a été mise en contact avec une dose de 1 350 000 ppm.h de NaOCl à pH 8.

La perméabilité de la membrane et sa perméabilité relative après trempage dans une solution d'eau réelle, avant et après la dose de NaOCl, sont mesurées.

Des spectres FTIR sont également réalisés respectivement avant et après contact avec une dose de 1 350 000 ppm.h de NaOCl.

La résistance mécanique de la membrane est testée par essais de traction longitudinale à la vitesse constante de déplacement du mord supérieur de 200 mm/min, à l'aide d'un banc de traction de type Instron®, avant et après la dose de NaOCl.

Enfin, les signaux SIMS sont enregistrés avant et après une dose de 600 000 ppm.h de NaOCl.

Les résultats de ces tests sont montrés dans le tableau 3 ci-après.

**Tableau 3 - Propriétés de perméabilité, résistance mécanique, signal FTIR à 1725 cm⁻¹ et signal SIMS pour la membrane F1 avant et après contact avec NaOCl**

| | Avant NaOCl | Après NaOCl |
|---|---|---|
| Perméabilité (I.h⁻¹.m⁻².bar⁻¹) à 20 °C | Lp₀=198±10 | Lp=189±10 |
| Rapport de la perméabilité à l'eau après trempage dans une eau réelle sur la perméabilité à l'eau avant trempage (Lp/Lp₀) | 0,73 ± 0,04 | 0,71 ± 0,03 |
| Force à la rupture (N) | 1,61 ± 0,03 | 1,63 ± 0,04 |
| Intensité relative du signal FTIR à 1725 cm⁻¹ | 0,21 ± 0,01 | 0,20 ± 0,01 |
| Signaux SIMS du copolymère (signal relatif à l'oxygène / fluor x10⁻⁴) | 3,64 ± 2 | 5,20 ± 3 |

Pour aucun de ces paramètres, on n'observe de variation significative due au traitement par NaOCl. Ceci démontre la grande capacité de résistance au vieillissement de la membrane conforme à l'invention.

### EXEMPLE 4 - Effet d'un copolymère à blocs amphiphile conforme à l'invention sur la vitesse de coagulation

### 4.1/ Matériel et méthode de mesure

Pour évaluer l'effet du copolymère à blocs amphiphile conforme à l'invention sur la vitesse de coagulation du collodion pour la fabrication d'une membrane polymère poreuse par un procédé d'inversion de phase, on utilise un dispositif tel que représenté de manière schématique sur la figure 4.

Ce dispositif de mesure comporte une source lumineuse blanche étendue 10. Celle-ci est surmontée d'un cristallisoir de coagulation 11 en verre Pyrex® optiquement transparent d'une capacité de 2l. Une plaque de coagulation circulaire 12, également en verre Pyrex® et transparente optiquement, est utilisée pour recevoir le collodion. Cette plaque 12 est placée sur 4 pieds 13 afin d'être maintenue à une hauteur de 5 cm de la source lumineuse 10.

Le collodion à analyser 14 est étalé de manière homogène sur la plaque de coagulation 12 à l'aide d'un couteau en acier inoxydable.

Un réservoir 15 contenant le non-solvant, plus particulièrement de l'eau, utilisé pour provoquer la coagulation du collodion, est disposé au-dessus du cristallisoir 11.

Un organe 16 de maintien de la membrane sur la plaque de coagulation 12, au fur et à mesure de sa formation, est placé sur le collodion 14. Un organe d'acquisition de clichés 17 prend appui sur l'organe de maintien 16, de sorte à assurer un meilleur maintien en place de la membrane, plus particulièrement en empêchant tout décollement de la membrane en cours de coagulation de la plaque de coagulation 12.

Un système 18 de compilation et de traitement des données issues de l'organe d'acquisition 17 complète le dispositif.

L'ensemble des éléments ci-dessus constitutifs du dispositif de mesure est placé dans un boite fermée afin éliminer toutes sources de lumière autre que celle venant de la source lumineuse blanche étendue 10.

Tous les éléments décrits ci-dessus, constitutifs du dispositif de mesure, sont classiques en eux-mêmes.

Les images acquises lors de la coagulation du collodion, sous l'effet du contact avec le non-solvant déversé sur le collodion, sont compilées et traitées par le système de traitement de données 18. Les images sont calibrées et normalisées afin d'obtenir des données comparables entre chaque collodion. La précision temporelle des mesures réalisées est inférieure ou égale à 1 s. Des mesures de répétabilité ont montré la constance des valeurs mesurées.

### 4.2/ Collodions étudiés

Les collodions réalisés et étudiés sont répertoriés dans le tableau 4 ci-après. Parmi ces collodions, les collodions Comp.1 à Comp. 8 sont des collodions comparatifs ne mettant pas en oeuvre de copolymère à blocs amphiphile conforme à l'invention ; les collodions C1 à C3 mettent en oeuvre le copolymère à blocs amphiphile conforme à l'invention de l'Exemple 1 (Copol.).

**Tableau 4 - Composition des collodions étudiés**

| Collodion | Matrice polymère (% en poids) | Additif (% en poids) | Solvant (% en poids) |
|---|---|---|---|
| Comp.1 | PVDF hsv900 (15) | - | NMP (85) |
| Comp.2 | PSF (18) | PVP K30 (15) | NMP (67) |
| Comp.3 | CTA (15) | - | NMP (85) |
| Comp.4 | PVDF hsv900 (15) | LiCl (3) | NMP (82) |
| Comp.5 | PVDF hsv900 (15) | PVP K10 (3) | NMP (82) |
| Comp.6 | PVDF hsv900 (15) | PVP K30 (3) | NMP (82) |
| Comp.7 | PVDF hsv900 (15) | PMMA (3) | NMP (82) |
| Comp.8 | PVDF hsv900 (15) | PEG 600Da (3) | NMP (82) |
| C1 | PVDF hsv900 (15) | Copol. (3) | NMP (82) |
| C2 | PVDF hsv900 (15) | Copol. (7) | NMP (78) |
| C3 | PVDF hsv900 (15) | Copol. (10) | NMP (75) |

### 4.3/ Résultats

On obtient les résultats suivants.

De manière tout à fait prévisible, on observe que la membrane Comp.2 à base de polysulfone (PSF) commence à coaguler très tôt (temps d'induction de 2 s) et coagule très rapidement (vitesse 1300 fois plus élevée que la membrane Comp.1 à base de PVDF). La membrane Comp.3, à base de triacétate de cellulose (CTA) commence à coaguler deux fois plus tôt que la membrane Comp.1 (2130 s contre 4060 s) et sa vitesse de coagulation est similaire.

L'ajout d'un additif tel que le PEG à hauteur de 3 % en poids (Comp.8) augmente le temps d'induction, et diminue très légèrement la vitesse de coagulation du collodion à base de PVDF. Le LiCl (Comp.4) et la PVP (Comp.5 et Comp.6) diminuent de 40 % le temps d'induction et augmentent de 40 % la vitesse de coagulation.

L'incorporation de PMMA dans le collodion (Comp.7) avance très nettement le début de la coagulation, qui a lieu environ 4 fois plus tôt que pour le collodion sans additif Comp.1.

Les vitesses de coagulation des collodions conformes à l'invention C1 à C3 sont nettement plus importantes que celles de Comp.1. On constate une diminution du temps d'induction de 600 % et une augmentation de la vitesse de coagulation de 350 %. Par rapport aux collodions Comp.4 à Comp.8, contenant des additifs autres que le copolymère à blocs amphiphile conforme à l'invention, les temps d'induction sont réduits d'un facteur compris entre 3,7 et 7,7. Les vitesses de coagulation sont augmentées d'un facteur 2 à 4,5.

Des tests complémentaires ont montré que l'ajout du copolymère à blocs amphiphile conforme à l'invention à des collodions contenant d'autres additifs classiques permet également d'accélérer la coagulation. Ainsi, l'ajout de 3 % en poids du copolymère à blocs amphiphile conforme à l'invention à un collodion contenant en outre du LiCl, permet de diminuer le temps d'induction d'un facteur 4,1, et d'augmenter la vitesse de coagulation d'un facteur 2,2.

Les temps d'induction sont en outre d'autant plus courts, et la vitesse de coagulation d'autant plus grande, que la concentration en copolymère à blocs amphiphile conforme à l'invention dans le collodion est élevée.

### REFERENCES BIBLIOGRAPHIQUES

Arkhangelsky et al., 2007, J. Membr. Sci. 305: 176-184
Fontananova et al., 2006, Desalination 192: 190-197
Hester et al., 1999, Macromolecules 32: 1643-1650
McKelvey et al., 1997, Journal of membrane science 124: 223-232
Mulder, 1996, Basic Principles of Membrane Technology (2nd ed.) Kluwer Academic Publishers, Dordrecht
Penga et al., 2012, Progress in Polymer Science 37: 1401-1424
Porter, 1990, Handbook of Industrial Membrane Technology, Noyes Publications, New Jersey
Qin et al., 2002, Desalination 146: 307-309
Rouaix et al., 2006, J. Membr. Sci. 277: 137-147
Wienk et al., 1995, J. Polym. Sci. A. Polym. Chem. 33: 49

## Revendications

1. Copolymère à blocs amphiphile comportant au moins un premier bloc hydrophile susceptible d'être obtenu à partir de monomères d'acrylate de n-butyle et de méthacrylate d'hydroxyéthyle, et un deuxième bloc hydrophobe susceptible d'être obtenu à partir d'un monomère de méthacrylate de méthyle.

2. Copolymère selon la revendication 1, consistant en un copolymère diblocs.

3. Copolymère selon l'une des revendications 1 à 2, dans lequel ledit premier bloc hydrophile est composé essentiellement d'un copolymère statistique contenant des monomères d'acrylate de n-butyle et de méthacrylate d'hydroxyéthyle.

4. Copolymère selon l'une des revendications 1 à 3, dans lequel ledit deuxième bloc hydrophobe est composé d'au moins 50 % de polyméthacrylate de méthyle, le reste étant formé d'un mélange de monomères méthacrylates ou acrylates, de préférence de monomères d'acrylate de n-butyle et de méthacrylate d'hydroxyéthyle.

5. Copolymère selon l'une des revendications 1 à 4, consistant en un copolymère (polyacrylate de n-butyle - co - polyhydroxyéthylméthacrylate - b - bloc hydrophobe), où le bloc hydrophobe est composé d'au moins 50 % de polyméthacrylate de méthyle, le reste étant formé d'un mélange de monomères méthacrylates ou acrylates, de préférence de monomères d'acrylate de n-butyle et de méthacrylate d'hydroxyéthyle.

6. Copolymère selon l'une des revendications 1 à 5, présentant une masse moléculaire moyenne en poids comprise entre 10 kg/mol et 400 kg/mol.

7. Copolymère selon l'une des revendications 1 à 6, dans lequel ledit premier bloc hydrophile et/ou ledit deuxième bloc hydrophobe est susceptible d'être obtenu par un procédé de polymérisation radicalaire contrôlée, de préférence par polymérisation SFRP.

8. Copolymère selon la revendication 7, dans lequel ledit premier bloc hydrophile et/ou ledit deuxième bloc hydrophobe est susceptible d'être obtenu par polymérisation SFRP en présence d'au moins une alcoxyamine, de préférence une monoalcoxyamine de formule (I) :

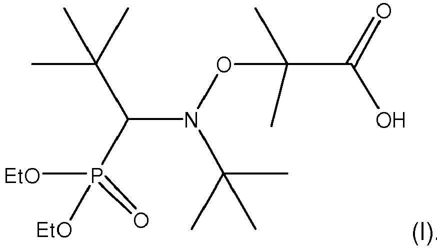

9. Utilisation d'un copolymère à blocs amphiphile selon l'une quelconque des revendications 1 à 8 en tant qu'additif pour la fabrication d'une membrane polymère de filtration, notamment de microfiltration ou d'ultrafiltration.

10. Membrane polymère, notamment de microfiltration ou d'ultrafiltration, **caractérisée en ce qu'**elle comprend une matrice polymère hydrophobe et un copolymère à blocs amphiphile selon l'une quelconque des revendications 1 à 8.

11. Membrane polymère selon la revendication 10, dans laquelle la matrice polymère hydrophobe comprend un polymère fluoré, de préférence un homopolymère de polyfluorure de vinylidène.

12. Membrane polymère selon l'une quelconque des revendications 10 à 11, comprenant 60 à 90 % en poids de ladite matrice polymère hydrophobe et 10 à 40 % en poids dudit copolymère à blocs amphiphile.

13. Membrane polymère selon l'une quelconque des revendications 10 à 12, susceptible d'être obtenue par un procédé d'inversion de phase, à partir d'une solution contenant ladite matrice polymère hydrophobe, ledit copolymère à blocs amphiphile, et le cas échéant un ou plusieurs autres additifs, en solution dans un solvant.

14. Membrane polymère selon la revendication 13, susceptible d'être obtenue par un procédé d'inversion de phase à partir d'une solution contenant les proportions en poids suivantes :
- 10 à 40 % de ladite matrice polymère hydrophobe, en particulier de PVDF;
- 0,1 à 30 % en poids dudit copolymère à blocs amphiphile ;
- 40 à 90 % de solvant ;
- le cas échéant, 0 à 20 % en masse d'additif(s) autre(s).

15. Utilisation d'une membrane polymère selon l'une quelconque des revendications 10 à 14 pour le traitement d'effluents, en particulier de l'eau.

## Patentansprüche

1. Amphiphiles Blockcopolymer mit mindestens einem ersten hydrophilen Block, der aus n-Butylacrylat- und Hydroxyethylmethacrylat-Monomeren erhältlich ist, und einem zweiten hydrophoben Block, der aus einem Methylmethacrylat-Monomer erhältlich ist.

2. Copolymer nach Anspruch 1, bestehend aus einem Diblockcopolymer.

3. Copolymer nach einem der Ansprüche 1 bis 2, wobei der erste hydrophile Block im Wesentlichen aus einem statistisch aufgebauten Copolymer, das n-Butylacrylat- und Hydroxyethylmethacrylat-Monomere enthält, besteht.

4. Copolymer nach einem der Ansprüche 1 bis 3, wobei der zweite hydrophobe Block aus mindestens 50% Polymethylmethacrylat besteht, wobei der Rest aus einer Mischung von Methacrylat- oder AcrylatMonomeren, vorzugsweise n-Butylacrylat- und Hydroxyethylmethacrylat-Monomeren, gebildet wird.

5. Copolymer nach einem der Ansprüche 1 bis 4, bestehend aus einem (Poly-n-butylacrylat-copolyhydroxyethylmethacrylat-b-hydrophober Block)-Copolymer, wobei der hydrophobe Block aus mindestens 50% Polymethylmethacrylat besteht, wobei der Rest aus einer Mischung von Methacrylat- oder AcrylatMonomeren, vorzugsweise n-Butylacrylat- und Hydroxyethylmethacrylat-Monomeren, gebildet wird.

6. Copolymer nach einem der Ansprüche 1 bis 5 mit einer gewichtsmittleren Molmasse zwischen 10 kg/mol und 400 kg/mol.

7. Copolymer nach einem der Ansprüche 1 bis 6, wobei der erste hydrophile Block und/oder der zweite hydrophobe Block durch ein Verfahren der kontrollierten radikalischen Polymerisation, vorzugsweise durch SFRP-Polymerisation, erhältlich ist bzw. sind.

8. Copolymer nach Anspruch 7, wobei der erste hydrophile Block und/oder der zweite hydrophobe Block durch SFRP-Polymerisation in Gegenwart mindestens eines Alkoxyamins, vorzugsweise eines Monoalkoxyamins der Formel (I): 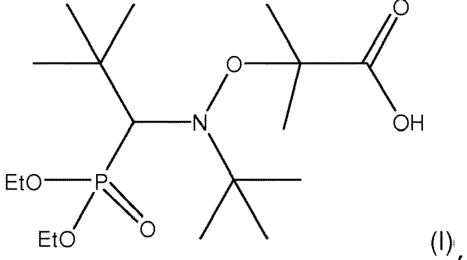 erhältlich ist bzw. sind.

9. Verwendung eines amphiphilen Blockcopolymers nach einem der Ansprüche 1 bis 8 als Additiv zur Herstellung einer Polymer-Filtrationsmembran, insbesondere einer Polymer-Mikrofiltrationsmembran oder -Ultrafiltrationsmembran.

10. Polymermembran, insbesondere Polymer-Mikrofiltrationsmembran oder -Ultrafiltrationsmembran, **dadurch gekennzeichnet, dass** sie eine hydrophobe Polymermatrix und ein amphiphiles Blockcopolymer nach einem der Ansprüche 1 bis 8 umfasst.

11. Polymermembran nach Anspruch 10, wobei die hydrophobe Polymermatrix ein Fluorpolymer, vorzugsweise ein Polyvinylidenfluorid-Homopolymer, umfasst.

12. Polymermembran nach einem der Ansprüche 10 bis 11, umfassend 60 bis 90 Gew.-% der hydrophoben Polymermatrix und 10 bis 40 Gew.-% des amphiphilen Blockcopolymers.

13. Polymermembran nach einem der Ansprüche 10 bis 12, die durch ein Phaseninversionsverfahren ausgehend von einer Lösung, die die hydrophobe Polymermatrix, das amphiphile Blockcopolymer und gegebenenfalls ein oder mehrere andere Additive in Lösung in einem Lösungsmittel enthält, erhältlich ist.

14. Polymermembran nach Anspruch 13, die durch ein Phaseninversionsverfahren ausgehend von einer Lösung, die die folgenden Gewichtsanteile umfasst, erhältlich ist:
- 10 bis 40% der hydrophoben Polymermatrix, insbesondere PVDF;
- 0,1 bis 30 Gew.-% des amphiphilen Blockcopolymers;
- 40 bis 90% Lösungsmittel;
- gegebenenfalls 0 bis 20 Massen-% eines anderen Additivs oder mehrerer anderer Additive.

15. Verwendung einer Polymermembran nach einem der Ansprüche 10 bis 14 zur Behandlung von Austragsströmen, insbesondere von Wasser.

## Claims

1. Amphiphilic block copolymer comprising at least one first hydrophilic block capable of being obtained from n-butyl acrylate and hydroxyethyl methacrylate monomers and a second hydrophobic block capable of being obtained from a methyl methacrylate monomer.

2. Copolymer according to Claim 1, consisting of a diblock copolymer.

3. Copolymer according to either of Claims 1 and 2, in which said first hydrophilic block is essentially composed of a random copolymer comprising n-butyl acrylate and hydroxyethyl methacrylate monomers.

4. Copolymer according to one of Claims 1 to 3, in which said second hydrophobic block is composed of at least 50% of polymethyl methacrylate, the remainder being formed of a mixture of methacrylate or acrylate monomers, preferably of n-butyl acrylate and hydroxyethyl methacrylate monomers.

5. Copolymer according to one of Claims 1 to 4, consisting of a poly(n-butyl acrylate)-co-poly(hydroxyethyl methacrylate)-b-hydrophobic block copolymer where the hydrophobic block is composed of at least 50% of polymethyl methacrylate, the remainder being formed of a mixture of methacrylate or acrylate monomers, preferably of n-butyl acrylate and hydroxyethyl methacrylate monomers.

6. Copolymer according to one of Claims 1 to 5, exhibiting a weight-average molecular weight of between 10 kg/mol and 400 kg/mol.

7. Copolymer according to one of Claims 1 to 6, in which said first hydrophilic block and/or said second hydrophobic block is capable of being obtained by a controlled radical polymerization process, preferably by SFRP polymerization.

8. Copolymer according to Claim 7, in which said first hydrophilic block and/or said second hydrophobic block is capable of being obtained by SFRP polymerization in the presence of at least one alkoxyamine, preferably a monoalkoxyamine of formula (I):

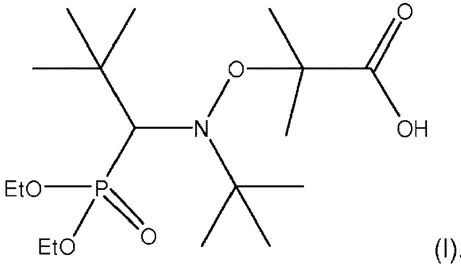

9. Use of an amphiphilic block copolymer according to any one of Claims 1 to 8 as additive in the manufacture of a polymer filtration membrane, in particular a polymer microfiltration or ultrafiltration membrane.

10. Polymer membrane, in particular a polymer microfiltration or ultrafiltration membrane, **characterized in that** it comprises a hydrophobic polymer matrix and an amphiphilic block copolymer according to any one of Claims 1 to 8.

11. Polymer membrane according to Claim 10, in which the hydrophobic polymer matrix comprises a fluoro polymer, preferably a polyvinylidene fluoride homopolymer.

12. Polymer membrane according to either one of Claims 10 and 11, comprising from 60 to 90% by weight of said hydrophobic polymer matrix and from 10 to 40% by weight of said amphiphilic block copolymer.

13. Polymer membrane according to any one of Claims 10 to 12, capable of being obtained by a phase inversion process starting from a solution comprising said hydrophobic polymer matrix, said amphiphilic block copolymer and, if appropriate, one or more other additives in solution in a solvent.

14. Polymer membrane according to Claim 13, capable of being obtained by a phase inversion process from a solution comprising the following proportions by weight:
- from 10 to 40% of said hydrophobic polymer matrix, in particular PVDF;
- from 0.1 to 30% by weight of said amphiphilic block copolymer;
- from 40 to 90% of solvent;
- if appropriate, from 0 to 20% by weight of other additive (s) .

15. Use of a polymer membrane according to any one of Claims 10 to 14 in the treatment of effluents, in particular of water.
